# EUROPÄISCHE PATENTSCHRIFT

(11) **EP 1 500 361 B1**
(45) Veröffentlichungstag und Bekanntmachung des Hinweises auf die Patenterteilung: **24.10.2007**
(21) Anmeldenummer: 04015512.9
(22) Anmeldetag: 01.07.2004
(51) Int. Cl.: A47J 37/08

(54) **Elektrischer Brotröster**
Electrical toaster
Grille-pain électrique

(30) Priorität: 22.07.2003 DE 10333311
(43) Veröffentlichungstag der Anmeldung: 26.01.2005
(73) Patentinhaber: BSH Bosch und Siemens Hausgeräte GmbH, 81739 München (DE)
(72) Erfinder: Kropf, Albert, 83365 Sondermoning-Nussdorf (DE); Schönfelder, Thomas, 83250 Marquartstein (DE)

(56) Entgegenhaltungen:
- DE-A- 2 612 608
- DE-A- 4 427 054

## Beschreibung

Die vorliegende Erfindung betrifft einen elektrischen Brotröster gemäß Oberbegriff des Patentanspruchs 1.

Bei elektrischen Brotröstern, die einen verschiebbaren, klappbaren oder aus dem Gehäuse des Brotrösters herausziehbaren Röstgutträger, einen sog. Brötchenaufsatz aufweisen, besteht oftmals das Bedürfnis, die Verschiebemechanik versteckt in das Gehäuse zu integrieren. Üblicherweise sind Betätigungselemente in Form von Schiebern o. dgl. an einer Gehäuseseitenwand vorgesehen, um den Brötchenaufsatz aus dem Gehäuseinneren herauszuschwenken. Dieser kann dann in einer Betriebsstellung bspw. in Gestalt von Metallbügeln über den Einschuböffnungen an der Gehäuseoberseite angeordnet sein. Bei an einer Gehäuseseitenwand angeordnetem Schieber entsteht das Problem, dass eine Kulissenführung notwendig ist, deren Schlitze sich über eine bestimmte Distanz an der Gehäuseseitenwand erstrecken. Diese Schlitze liegen je nach Stellung des Schiebers offen. Dies kann zu Verschmutzungsproblemen führen und zudem aus gestalterischen Gründen unerwünscht sein.

Ein elektrischer Brotröster mit einer verschwenkbaren Brötchenauflage ist aus der DE 44 270 54 A1 bekannt. Hierbei wird die Brötchenauflage durch einen außen am Gehäuse angebrachten vertikal verschiebbaren Schieber betätigt, der mit einer innen im Gehäuse versteckt angeordneten Schwenkmechanik verbunden ist. In jeder Stellung des Schiebers verbleibt ein Teil eines an der Gehäusewand liegenden Schlitzes offen zugänglich.

Weiterhin ist ein elektrischer Brotröster mit einer verschwenkbaren Brötchenauflage aus der DE 26 126 08 A1 bekannt. Auch hier ist die Brötchenauflage durch einen außen am Gehäuse angeordneten Schieber aus ihrer Ruhestellung in eine Arbeitsstellung bringbar. Auch dieser Schieber lässt in jeder Stellung einen Teil eines am Gehäuse angeordneten Schlitzes offen, was zu den genannten Problemen führen kann.

Der vorliegenden Erfindung liegt die Aufgabe zu Grunde, einen elektrischen Brotröster mit einem Betätigungselement insbesondere für einen verstellbaren Brötchenaufsatz zur Verfügung zu stellen, das sich einfach bedienen lässt und zudem eine möglichst geringe Anfälligkeit für eindringenden Schmutz aufweist.

Diese Aufgabe wird mit dem Gegenstand des unabhängigen Patentanspruchs gelöst. Merkmale vorteilhafter Weiterbildungen ergeben sich aus den abhängigen Ansprüchen.

Der erfindungsgemäße elektrischer Brotröster mit einem schwenk- oder verschiebbaren Röstgutträger weist den Vorteil auf, dass vertikal verlaufende Gehäuseschlitze zur Durchführung einer Koppeleinrichtung zwischen einer Handbetätigungseinrichtung und einer Gelenk- und/oder Verschiebeeinrichtung in jeder Stellung eines Schiebers der Handbetätigungseinrichtung weitgehend abgedeckt und von außen nicht sichtbar sind. Diese Abdeckung kann aus gestalterischen Gründen wünschenswert und vorteilhaft sein. Zudem sind die verdeckten Gehäuseschlitze, in denen sich ein mit dem Schieber der Handbetätigungseinrichtung verbundener Zapfen o. dgl. kulissenartig bewegen kann, weniger verschmutzungsanfällig, so dass weniger Schmutz in das Gehäuseinnere eindringen kann. Ein weiterer Vorteil der abgedeckten Gehäuseöffnung besteht darin, dass der Wärmeaustritt durch die Schlitze aus dem Gehäuse vermindert ist. Auf diese Weise kann der Griff der Handbetätigungseinrichtung jederzeit problemlos berührt werden, da er sich im Betrieb des Brotrösters weniger stark erwärmt.

Die Abdeckung der Schlitze kann insbesondere mittels eine Abdeckplatte erfolgen, die über einem Verschiebemechanismus der Handbetätigungseinrichtung angeordnet und in der eine Verschiebeplatte kulissenartig geführt ist. An dieser verschiebbaren Platte befindet sich vorzugsweise ein Haken, Zapfen o. dgl., der in die schlitzartige Gehäuseöffnung eingreift und der mit der Koppeleinrichtung verbunden ist. Auf diese Weise wird eine flache und kompakte Handbetätigungseinrichtung zur Verfügung gestellt, die keine störenden Gehäuseöffnungen benötigt.

Die Abdeckplatte kann lösbar an der Gehäuseseitenwand befestigt sein, insbesondere über Schnapphaken o. dgl., bei denen in eingeschnapptem Zustand keine Befestigungsmittel sichtbar bleiben.

Die Handbetätigungseinrichtung kann insbesondere einen Griffbügel umfassen, der mittels seitlicher Verbindungsstücke die Abdeckplatte umgreift und mit der verschiebbaren Platte verbunden ist. Die mit dem Griffbügel verbundene verschiebbare Platte kann in vorteilhafter Ausgestaltung über eine Kulissenführung längsverschiebbar in der Abdeckplatte geführt sein.

Auf die beschriebene Weise ist eine gestalterisch vorteilhafte und glattflächige Handbetätigungseinrichtung für einen verschieb- oder verschwenkbaren Röstgutträger eines elektrischen Brotrösters geschaffen, die nur sehr kleine Öffnungen in dessen Gehäuse frei lässt. Die Handbetätigungseinrichtung für den Brötchenaushub kann an einer gegenüber liegenden Gehäuseseite angeordnet und weitgehend auf gleiche Weise gestaltet sein wie für den verstellbaren Röstgutträger. Auf diese Weise ist eine weitgehend symmetrische äußere Gestaltung des elektrischen Brotrösters ermöglicht.

Die Erfindung wird nachfolgend anhand eines bevorzugten Ausführungsbeispiels unter Bezugnahme der beiliegenden Zeichnungen näher erläutert. Dabei zeigt:
- Figur 1: einen elektrischen Brotröster mit einem verschiebbar oder verschwenkbar angeordneten Röstgutträger in schematischer Perspektivdarstellung,
- Figur 2: eine schematische Perspektivdarstellung des elektrischen Brotrösters entsprechend Figur 1, jedoch ohne umhüllendes Gehäuse,
- Figur 3: eine perspektivische Detailansicht eines Teils einer Handbetätigungseinrichtung des Brotrösters,
- Figur 4: eine schematische Perspektivdarstellung einer Variante des elektrischen Brotrösters und
- Figur 5: eine perspektivische Detailansicht der Handbetätigungseinrichtung des Brotrösters gemäß Figur 4.

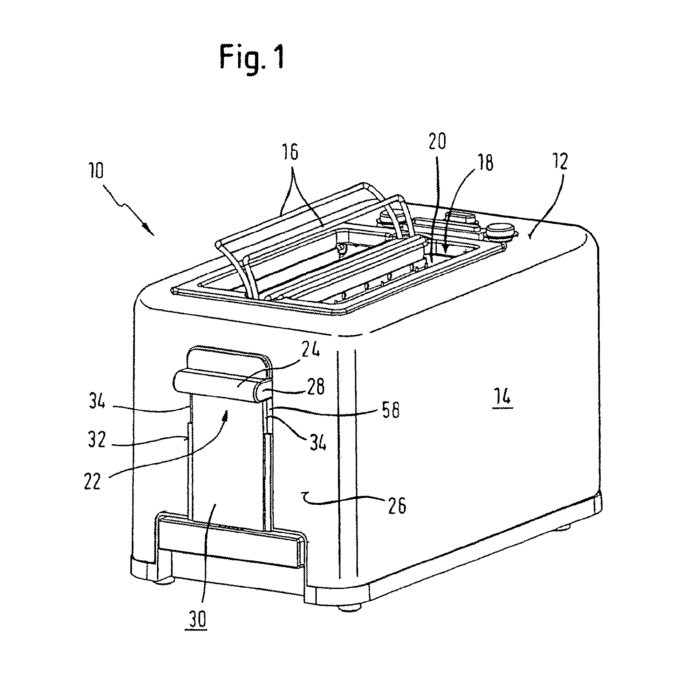

Ein elektrischer Brotröster 10 mit einem aus einer Oberseite 12 eines Gehäuses 14 heraus schwenkbaren Röstgutträgers 16, der auch als Brötchenaufsatz bezeichnet wird, ist anhand der schematischen Darstellung der Figur 1 verdeutlicht. Der Röstgutträger 16 kann mittels einer Gelenk- und/oder Verschiebeeinrichtung zwischen einer verdeckt im Gehäuse 14 angeordneten Aufbewahrungslage und einer, in einem Abstand zu einer oberen Öffnung 18 einer Röstkammer 20 befindlichen Betriebslage verschwenkt bzw. verschoben werden. Die Gelenk- und/oder Verschiebeeinrichtung (nicht dargestellt) wird über eine Handbetätigungseinrichtung 22 betätigt, die einen Griffbügel 24 umfasst, der in vertikaler Richtung entlang einer Gehäuseseitenwand 26 verschiebbar ist.

Der Griffbügel 24 umgreift mit seitlich angeordneten, flachen Verbindungsstegen 28 seitlich eine Abdeckplatte 30, welche für eine weitgehende Abdeckung von Längsschlitzen in der Gehäuseseitenwand 26 sorgt, die für eine Koppelungseinrichtung (nicht dargestellt) zwischen der Handbetätigungseinrichtung 22 und der Gelenk- und/oder Verschiebeeinrichtung im Gehäuseinneren notwendig sind. Diese schlitzartigen Gehäuseöffnungen werden so weitgehend abdeckt, dass nahezu kein Schmutz in das Gehäuse 14 eindringen und weitgehend keine Wärme aus diesem heraus dringen kann.

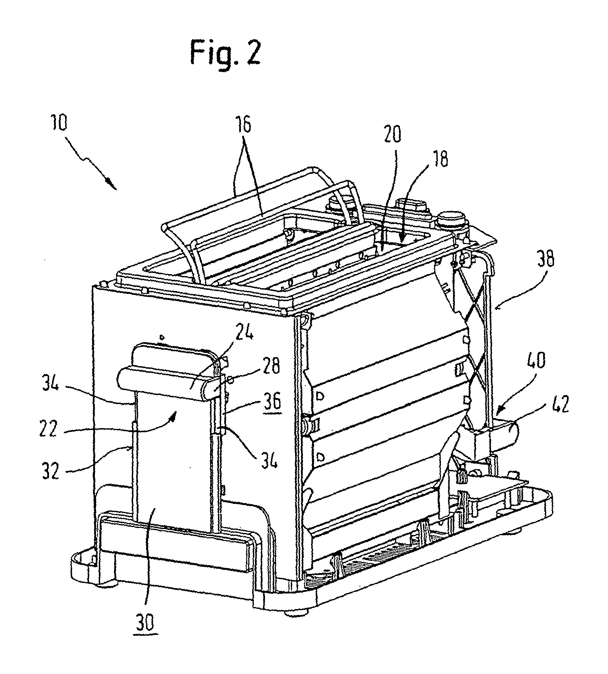

Die Abdeckplatte 30 ist im gezeigten Ausführungsbeispiel als recheckförmige Platte ausgebildet, die an ihren Seitenkanten 32 längliche Aussparungen 34 aufweist, in denen die seitlich am Griffbügel 24 angeordneten Verbindungsstege 28 geführt sind. Diese Führung wird anhand der Darstellung der Figur 2 nochmals verdeutlicht. Hier ist erkennbar, dass die Verbindungsstege 28 jeweils mit einer verschiebbaren Platte 36 verbunden sind, die innerhalb des Gehäuses 14 und verdeckt von der Abdeckplatte 30 parallel zu dieser geführt ist.

Anhand der Figur 2 wird zudem die an einer gegenüber liegenden Gehäuseseitenwand 38 angeordnete weitere Betätigungseinrichtung 40 verdeutlicht, die einen vertikal entlang der Gehäuseseitenwand 38 verschiebbaren weiteren Griffbügel 42 aufweist, mit dessen Betätigung ein Brötchenausbub (nicht dargestellt) in eine Betriebslage gebracht werden kann. Die Anordnung der beiden Handbetätigungseinrichtungen 22 und 40 verdeutlicht die Möglichkeiten einer weitgehend einheitlichen und ggf. symmetrischen Gestaltung.

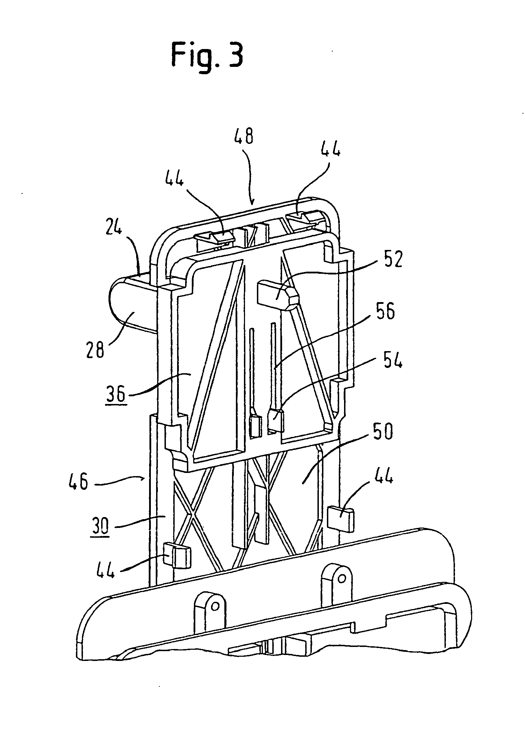

Die schematische Detailansicht der Figur 3 verdeutlicht die räumliche Anordnung der verschiebbaren Platte 36 mit dem damit verbundenen Griffbügel 24 der Handbetätigungseinrichtung 22 und der Abdeckplatte 30. Hier ist erkennbar, dass die Abdeckplatte 30 über mehrere Schnapphaken 44 mit der Gehäuseseitenwand 26 lösbar verbunden ist. An beiden Längsseiten 46 sowie an den Schmalseiten 48 der der Gehäuseseitenwand 26 zugewandten Rückseite 50 sind derartige Schnapphaken 44 vorgesehen, die in entsprechende Aussparungen (nicht dargestellt) im Gehäuse 14 einschiebbar und dort verrastbar sind. An der zum Gehäuse 14 weisenden Seite der verschiebbaren Platte 36 ist ein Haken 52 bzw. Zapfen angeordnet, der mit der Koppeleinrichtung (nicht dargestellt) zur Betätigung des Schwenk- bzw. Verschiebemechanismus des Röstgutträgers wirkverbunden ist.

Weitere Rasthaken 54 stellen eine längs verschiebbare Verbindung zur verschiebbaren Platte 36 her, die entsprechende Längsschlitze 56 zu deren Führung aufweist. Mittels der beiden Rasthaken 54 sowie den in den Aussparungen 34 an den Seitenkanten 32 der Abdeckplatte 30 geführten Verbindungsstege 28 ist somit eine Kulissenführung der verschiebbaren Platte 36 und damit des Griffbügels 24 gebildet.

Anhand der Figur 1 ist verdeutlicht, dass die einzigen Gehäuseöffnungen an der Gehäuseseitenwand 26 zur Durchführung der Handbetätigungseinrichtung 22 in das Gehäuseinnere die beiden schlitzartigen Gehäuseöffnungen 58 im Bereich der Aussparungen 34 der Abdeckplatte 30 sind, welche jedoch von der verschiebbaren Platte 36 in der oberen Stellung des Griffbügels 24 vollständig abgedeckt werden. Die schlitzartigen Gehäuseöffnungen 58 bleiben allerdings in der untersten Stellung des Griffbügels 24 offen, da die verschiebbare Platte 36 den Griffbügel 24 nach oben hin nur unwesentlich überragt.

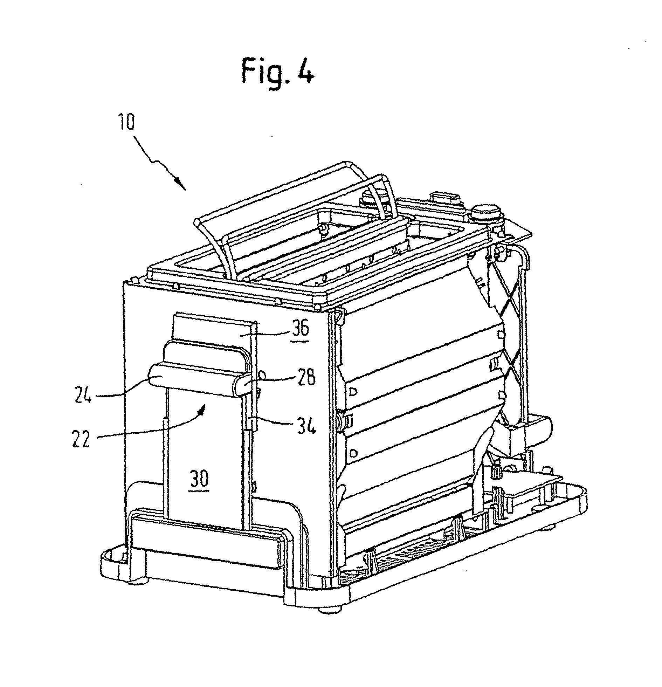

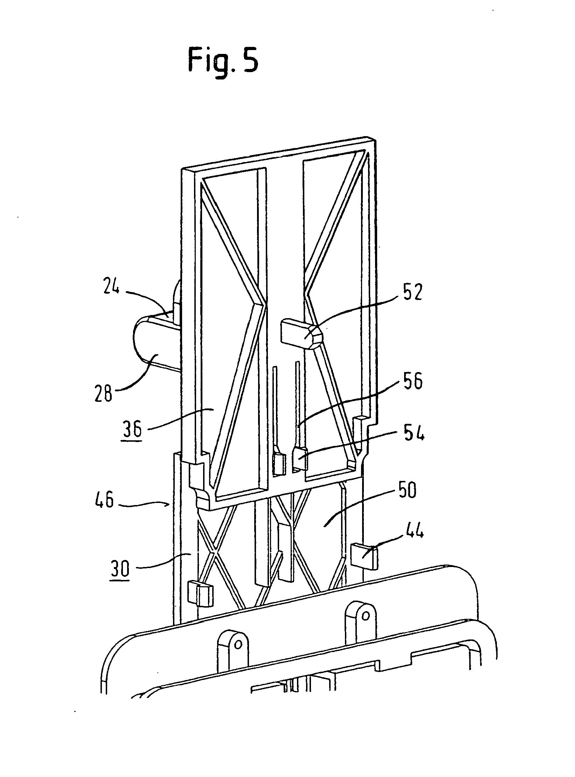

Die Figuren 4 und 5 illustrieren eine alternative Variante der Handbetätigungseinrichtung 22, bei welcher die beiden schlitzartigen Gehäuseöffnungen 58 in jeder Stellung des Griffbügels 24 vollständig von der verschiebbaren Platte 36 abgedeckt sind. Diese ist zu diesem Zweck nach oben hin verlängert, wodurch auch bei der untersten Stellung des Griffbügels 24 eine vollständige Abdeckung der Gehäuseöffnungen 58 gewährleistet ist.

Die zusätzliche Befestigung der Abdeckplatte 30 an deren oberer Schmalseite 48 ist bei dieser Variante nicht dargestellt, kann jedoch durch entsprechende Aussparungen in der verschiebbaren Platte 36 problemlos gewährleistet werden.

Die Einzelteile der Handbetätigungseinrichtung können wahlweise aus geeignetem Kunststoff bzw. aus Metall bestehen. Die Materialwahl hängt dabei von der geforderten Festigkeit wie auch von der gewünschten optischen und/oder haptischen Wirkung der einzelnen Teile ab.

Weitere Varianten der Handbetätigungseinrichtung 22 sind denkbar und ohne weiteres realisierbar, bspw. eine einseitige oder mittige Führung des Griffbügels 24 mit nur einer schlitzartigen Gehäuseöffnung.

Alternativ ist es auch möglich eine aus dem Stand der Technik, z. B. DE 44 270 54 A1 bekannte schlitzartige Gehäuseöffnung, durch die ein an sich bekannter, von einer unteren Rückstellung in eine obere Entnahmestellung verfahrbarer Brötchenträger aus der Röstkammer nach außen aus dem Gehäuse ragt, wie aus der DE 44 270 54 A1 bekannt, durch eine entsprechende erfindungsgemäß abgewandelte Handbetätigungseinrichtung des Brötchenträgers in jeder Stellung des Schiebers weitgehend abzdecken.

### Bezugszeichenliste

- 10: Brotröster
- 12: Oberseite
- 14: Gehäuse
- 16: Röstgutträger
- 18: Öffnung
- 20: Röstkammer
- 22: Handbetätigungseinrichtung
- 24: Griffbügel
- 26: Gehäuseseitenwand
- 28: Verbindungssteg
- 30: Abdeckplatte
- 32: Seitenkante
- 34: Aussparung
- 36: verschiebbare Platte
- 38: gegenüber liegende Gehäuseseitenwand
- 40: weitere Handbetätigungseinrichtung
- 42: weiterer Griffbügel
- 44: Schnapphaken
- 46: Längsseite
- 48: Schmalseite
- 50: Rückseite
- 52: Haken
- 54: Rasthaken
- 56: Längsschlitz
- 58: schlitzartige Gehäuseöffnung

## Patentansprüche

1. Elektrischer Brotröster (10) mit einem Gehäuse (14) und mit mindestens einer vertikalen Röstkammer (20), die von mindestens einer oberen Öffnung (18) im Gehäuse (14) zugänglich ist, mit einem Röstgutträger (16), der mittels einer Gelenk- und/oder Verschiebeeinrichtung zwischen einer Aufbewahrungslage und einer, in einem Abstand zur oberen Öffnung (18) befindlichen Betriebslage schwenk- oder verschiebbar ist, und mit einer Handbetätigungseinrichtung (22), die einen außen am Gehäuse (14) angeordneten und vertikal entlang einer Gehäuseseitenwand (26) bewegbaren Schieber umfasst, und die mit der Gelenk- und/oder Verschiebeeinrichtung wirkverbunden ist, wobei in der Gehäuseseitenwand (26) wenigstens eine schlitzartige Gehäuseöffnung (58) zur Durchführung einer Koppeleinrichtung zwischen der Handbetätigungseinrichtung (22) und der Gelenk- und/oder Verschiebeeinrichtung vorgesehen ist, **dadurch gekennzeichnet, dass** die wenigstens eine schlitzartige Gehäuseöffnung (58) in jeder Stellung des Schiebers weitgehend abgedeckt ist.

2. Elektrischer Brotröster nach Anspruch 1, **dadurch gekennzeichnet, dass** die wenigstens eine schlitzartige Gehäuseöffnung (58) von einer dem Schieber zugeordneten Abdeckplatte (30) abgedeckt ist.

3. Elektrischer Brotröster nach Anspruch 1 oder 2, **dadurch gekennzeichnet, dass** der Schieber einen horizontal angeordneten Griffbügel (24) umfasst, der in vertikaler Richtung entlang der Gehäuseseitenwand (26) verschiebbar ist.

4. Elektrischer Brotröster nach Anspruch 3, **dadurch gekennzeichnet, dass** der Griffbügel (24) an seinen seitlichen Enden jeweils über einen Verbindungssteg (28) mit einer verschiebbaren Platte (36) verbunden ist, die mit der Gelenk- und/oder Verschiebeeinrichtung des Brotgutträgers (16) wirkverbunden ist.

5. Elektrischer Brotröster nach Anspruch 3 oder 4, **dadurch gekennzeichnet, dass** die Abdeckplatte (30) zwischen der verschiebbaren Platte (36) und dem Griffbügel (24) angeordnet ist.

6. Elektrischer Brotröster nach einem der Ansprüche 3 bis 5, **dadurch gekennzeichnet, dass** die Verbindungsstege (28) des Griffbügels (24) die Abdeckplatte (30) jeweils seitlich umgreifen.

7. Elektrischer Brotröster nach einem der Ansprüche 2 bis 6, **dadurch gekennzeichnet, dass** die Abdeckplatte (30) lösbar an der Gehäuseseitenwand (26) befestigt ist.

8. Elektrischer Brotröster nach einem der Ansprüche 2 bis 7, **dadurch gekennzeichnet, dass** die Abdeckplatte (30) über mehrere Schnapphaken (44) o. dgl. mit der Gehäuseseitenwand (26) verbunden ist.

9. Elektrischer Brotröster nach einem der Ansprüche 3 bis 8, **dadurch gekennzeichnet, dass** die mit dem Griffbügel (24) verbundene verschiebbare Platte (36) über eine Kulissenführung längsverschiebbar in der Abdeckplatte (30) geführt ist.

10. Elektrischer Brotröster nach Anspruch 9, **dadurch gekennzeichnet, dass** die verschiebbare Platte (36) wenigstens einen vertikal verlaufenden Längsschlitz (56) aufweist, in den wenigstens ein Rasthaken (54) der Abdeckplatte (30) eingreift.

11. Elektrischer Brotröster nach Anspruch 9 oder 10, **dadurch gekennzeichnet, dass** die verschiebbare Platte (36) in vertikaler Richtung zwischen zwei Endstellungen verschiebbar ist, die jeweils durch einen mechanischen Anschlag definiert sind.

12. Elektrischer Brotröster nach einem der voranstehenden Ansprüche, **dadurch gekennzeichnet, dass** die verschiebbare Platte (36) wenigstens einen Haken (52) oder Zapfen aufweist, der in das Gehäuse (14) ragt und mit der Koppeleinrichtung wirkverbunden ist.

## Claims

1. Electric toaster (10) with a housing (14) and with at least one vertical toasting chamber (20), which is accessible from at least one upper opening (18) in the housing (14), with a toasting stock carrier (16), which is pivotable or displaceable by means of a pivoting and/or displacing device between a storage position and an operating position disposed at a spacing from the upper opening (18), and with a manual actuation device (22), which comprises a slide arranged externally at the housing (14) are movable vertically along a housing side wall (26) and which is operatively connected with the pivoting and/or displacing device, wherein at least one slot-like housing opening (58) for lead-through of a coupling device between the manual actuation device (22) and the pivoting and/or displacing device is provided in the housing wall (26), **characterised in that** the at least one slot-like housing opening (58) is substantially covered in each setting of the slide.

2. Electric toaster according to claim 1, **characterised in that** the at least one slot-like housing opening (58) is covered by a cover plate (30) associated with the slide.

3. Electric toaster according to claim 1 or 2, **characterised in that** the slide comprises a horizontally arranged grip bracket (24) which is displaceable in vertical direction along the housing side wall (26).

4. Electric toaster according to claim 3, **characterised in that** the grip bracket (24) is connected at each of its lateral ends by way of a respective connecting web (28) with a displaceable plate (36) operatively connected with the pivoting and/or displacing device of the bread stock carrier (16).

5. Electric toaster according to claim 3 or 4, **characterised in that** the cover plate (30) is arranged between the displaceable plate (36) and the grip bracket (24).

6. Electric toaster according to one of claims 3 to 5, **characterised in that** the connecting webs (28) of the grip bracket (24) respectively laterally engage around the cover plate (30).

7. Electric toaster according to one of claims 2 to 6, **characterised in that** the cover plate (30) is detachably fastened to the housing side wall (26).

8. Electric toaster according to one of claims 2 to 7, **characterised in that** the cover plate (30) is connected with the housing side wall (26) by way of several snap hooks (44) or the like.

9. Electric toaster according to one of claims 3 to 8, **characterised in that** the plate (36) displaceably connected with the grip bracket (24) is guided in the cover plate (30) by way of a gate guide to be longitudinally displaceable.

10. Electric toaster according to claim 9, **characterised in that** the displaceable plate (36) has at least one vertically extending longitudinal slot (56) in which at least one detent hook (54) of the cover plate (30) engages.

11. Electric toaster according to claim 9 or 10, **characterised in that** the displaceable plate (36) is displaceable in vertical direction between two end settings each defined by a respective mechanical abutment.

12. Electric toaster according to one of the preceding claims, **characterised in that** the displaceable plate (36) has at least one hook (52) or pin which projects into the housing (14) and is operatively connected with the coupling device.

## Revendications

1. Grille-pain (10) électrique comprenant un boîtier (14) et au moins une chambre à griller (20) verticale, qui est accessible par au moins une ouverture (18) supérieure dans le boîtier (14), un support d'article à grille (16), qui peut basculer ou coulisser au moyen d'un dispositif d'articulation et/ou de coulissement entre une position de conservation et une position de service se trouvant à une certaine distance de l'ouverture (18) supérieure, et un dispositif d'actionnement manuel (22), qui comprend un coulisseau disposé à l'extérieur sur le boîtier (14) et pouvant être déplacé verticalement le long d'une paroi latérale de boîtier (26), et qui est en liaison active avec le dispositif d'articulation et/ou de coulissement, au moins une ouverture de boîtier (58) en forme de fente pour le passage d'un dispositif d'accouplement entre le dispositif d'actionnement manuel (22) et le dispositif d'articulation et/ou de coulissement étant prévue dans la paroi latérale de boîtier (26), **caractérisé en ce que** la au moins une ouverture de boîtier (58) en forme de fente est largement recouverte dans toute position du coulisseau.

2. Grille-pain électrique selon la revendication 1, **caractérisé en ce que** la au moins une ouverture de boîtier (58) en forme de fente est recouverte par une plaque de recouvrement (30) attribuée au coulisseau.

3. Grille-pain électrique selon la revendication 1 ou 2, **caractérisé en ce que** le coulisseau comprend une bride poignée (24) disposée horizontalement, qui peut coulisser dans le sens vertical le long de la paroi latérale de boîtier (26).

4. Grille-pain électrique selon la revendication 1 ou 2, **caractérisé en ce que** la bride poignée (24) est reliée sur ses extrémités latérales à chaque fois par une nervure de liaison (28) à une plaque (36) coulissante, qui est en liaison active avec le dispositif d'articulation et/ou le dispositif de coulissement du support à pain (16).

5. Grille-pain électrique selon la revendication 3 ou 4, **caractérisé en ce que** la plaque de recouvrement (30) est disposée entre la plaque (36) coulissante et la bride poignée (24).

6. Grille-pain électrique selon l'une quelconque des revendications 3 à 5, **caractérisé en ce que** les nervures de liaison (28) de la bride poignée (24) entourent à chaque fois latéralement la plaque de recouvrement (30).

7. Grille-pain électrique selon l'une quelconque des revendications 2 à 6, **caractérisé en ce que** la plaque de recouvrement (30) est fixée de façon amovible sur la paroi latérale du boîtier (26).

8. Grille-pain électrique selon l'une quelconque des revendications 2 à 7, **caractérisé en ce que** la plaque de recouvrement (30) est reliée au moyen de plusieurs crochets à encliquetage (44) ou similaires à la paroi latérale de boîtier (26).

9. Grille-pain électrique selon l'une quelconque des revendications 3 à 8, **caractérisé en ce que** la plaque (36) coulissante et reliée à la bride poignée (24) est guidée dans la plaque de recouvrement (30) de façon à pouvoir coulisser dans le sens longitudinal au moyen d'un guide à coulisse.

10. Grille-pain électrique selon la revendication 9, **caractérisé en ce que** la plaque (36) coulissante présente au moins une fente longitudinale (56) agencée verticalement, dans laquelle s'engage au moins un crochet d'encliquetage (54) de la plaque de recouvrement (30).

11. Grille-pain électrique selon la revendication 9 ou 10, **caractérisé en ce que** la plaque (36) coulissante peut coulisser dans le sens vertical entre deux positions extrêmes, qui sont définies chacune par une butée mécanique.

12. Grille-pain électrique selon l'une quelconque des revendications précédentes, **caractérisé en ce que** la plaque (36) coulissante présente au moins un crochet (52) ou un tenon qui dépasse dans le boîtier (14) et est en liaison active avec le dispositif d'accouplement.
